(19) Europäisches Patentamt
European Patent Office
Office européen des brevets

(11) Numéro de publication: **0 481 848 B1**

(12) **FASCICULE DE BREVET EUROPEEN**

(45) Date de publication de fascicule du brevet: **17.05.95**

(51) Int. Cl.$^{6}$: **C08F 214/18**, C08F 216/14, C08F 2/06, C09D 127/12

(21) Numéro de dépôt: **91402699.2**

(22) Date de dépôt: **09.10.91**

# (54) Copolymère durcissable fluoré, son procédé de fabrication et son application dans les vernis et peintures.

(30) Priorité: **19.10.90 FR 9012969**

(43) Date de publication de la demande: **22.04.92 Bulletin 92/17**

(45) Mention de la délivrance du brevet: **17.05.95 Bulletin 95/20**

(84) Etats contractants désignés: **AT BE CH DE DK ES FR GB GR IT LI LU NL SE**

(56) Documents cités:
**EP-A- 0 180 962**
**GB-A- 2 163 756**

(73) Titulaire: **ELF ATOCHEM S.A.**
**4 & 8, Cours Michelet**
**La Défense 10**
**F-92800 Puteaux (FR)**

(72) Inventeur: **Kappler, Patrick**
**20 Allée St Simon**
**F-69130 Ecully (FR)**
Inventeur: **Perillon, Jean-Luc**
**18 Lot Bois Taillefer**
**F-27300 Bernay (FR)**

(74) Mandataire: **Foiret, Claude et al**
**ELF ATOCHEM S.A.**
**Département Propriété Industrielle**
**La Défense 10 - Cedex 42**
**F-92091 Paris-La-Défense (FR)**

EP 0 481 848 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un copolymère fluoré durcissable, ou encore réticulable, de chlorotrifluoroéthylène ($C_2F_3Cl$), de tétrafluoroéthylène ($C_2F_4$), d'un éther vinylique non hydroxylé et d'un polyol allylique. Ce copolymère soluble dans les solvants organiques est particulièrement recommandé pour la fabrication de peintures et vernis.

Les polymères fluorés sont connus pour leurs bonnes propriétés mécaniques et leur excellente résistance aux produits chimiques et aux intempéries. Toutefois, leur insolubilité dans les solvants classiques les rend inutilisables pour certaines applications dont par exemple celle de résine pour peintures et vernis où leurs propriétés sont recherchées pour la fabrication de revêtement de bonne résistance et d'entretien facile.

Afin de profiter des propriétés des polymères fluorés tout en évitant leurs inconvénients, des moyens ont été recherchés pour les rendre solubles dans les solvants organiques classiques. Pour ce faire, il est connu de diminuer la cristallinité des polymères fluorés par copolymérisation de monomères éthyléniquement insaturés dont un au moins est fluoré. En outre pour utiliser de tels copolymères, il est souhaitable pour certaines applications, en particulier pour leur emploi dans la fabrication des peintures et vernis, de leur conserver un degré suffisant de rigidité, et de les rendre durcissables par incorporation dans leur structure de groupements fonctionnels.

Dans ces conditions, les homopolymères ne contenant que du $C_2F_4$ ou du $C_2F_3Cl$ sont totalement insolubles dans les solvants usuels compte tenu de leur aptitude à cristalliser. Afin de rendre soluble des copolymères de $C_2F_4$ ou $C_2F_3Cl$, il faut incorporer dans la composition de copolymère final, une quantité importante de monomère non fluoré. La bonne solubilité dans des solvants courants est nécessaire pour faire des peintures et vernis de fort extrait sec et de faible viscosité en vue de faciliter la mise en oeuvre.

Pour donner cette solubilité et rendre durcissables ces copolymères on copolymérise au moins un monomère fluoré et un monomère éthyléniquement insaturé possédant un groupement fonctionnel, le plus souvent choisi étant le groupement hydroxy à cause de sa réticulation facile à mettre en oeuvre avec les isocyanates ou les résines de mélamine-formol.

Des copolymères fluorés à base de $C_2F_4$ ou $C_2F_3Cl$, solubles dans les solvants courants et porteurs de fonctions hydroxy sont décrits dans FR 2 488 260 et FR 2 569 703 ainsi que dans EP 180 962.

Les copolymères décrits dans FR 2 488 260 sont constitués d'association de $C_2F_3Cl$ et/ou $C_2F_4$ avec des éthers vinyliques hydroxylés. Le taux d'oléfines fluorés selon la technique décrite, ne dépasse pas 60 % en mol. et se situe davantage autour de 50 % en mol. compte tenu de l'alternance de motifs fluorés et non fluorés.

Les copolymères décrits dans FR 2 569 703 sont caractérisés par l'association de $C_2F_3Cl$ avec un ester vinylique, le groupement fonctionnel étant apporté par un dérivé allylique monohydroxylé.

Les copolymères décrits dans EP 180 962 sont caractérisés par l'association d'une fluorooléfine quelconque avec un ester vinylique. Le groupement fonctionnel est apporté par un éther vinylique hydroxylé.

Dans ces deux derniers documents la présence de l'ester vinylique est nécessaire pour rendre soluble le copolymère. La quantité d'ester vinylique nécessaire pour obtenir une bonne solubilité est en général importante : jusqu'à 70 et 60 % molaire.

La forte tendance à l'homopolymérisation des monomères du type ester vinylique rend inévitable la présence de séquences voisines d'esters vinyliques, ce qui est très pénalisant sur le plan du vieillissement des peintures.

La présente invention a pour objet un copolymère facilement durcissable, en présence éventuellement d'un agent durcissant. Ce copolymère possède une excellente tenue au vieillissement à long terme et, malgré un fort taux de fluor apporté par $C_2F_3Cl$ et $C_2F_4$ en quantités importantes, possède une excellente solubilité dans les solvants, une bonne compatibilité avec les durcisseurs du type résines de mélamineformol ou polyisocyanates et une bonne adhérence sur les substrats classiques.

Le copolymère durcissable selon l'invention contenant les restes de copolymérisation d'un monomère fluoré et d'un composé allylique est caractérisé en ce que :

a) les restes de monomère fluoré proviennent de l'association de tétrafluoroéthylène et de chlorotrifluoroéthylène,

b) les restes du composé allylique proviennent d'un polyol allylique de formule :

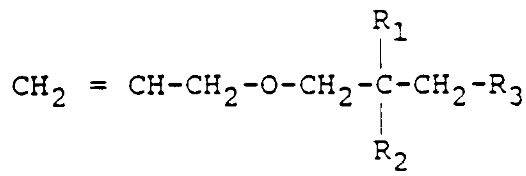

$R_1$ étant H ou $CH_2OH$, $R_2$ étant OH ou $CH_2OH$, $R_3$ étant $CH_3$ ou OH,
sachant que $R_1$ et $R_3$ ne peuvent être simultanément H et $CH_3$ et en ce qu'il contient en outre
c) les restes de copolymérisation d'un éther vinylique de formule :

$CH_2$ = CH-O-R

dans laquelle R est un radical alkyl linéaire ou ramifié possédant de 2 à 13 atomes de carbone.

Le copolymère durcissable fluoré est caractérisé en ce qu'il comprend pour 100 moles de l'ensemble des restes des monomères éthyléniquement insaturés le constituant les restes de :

- 62 à 75 moles représentant la somme de $C_2F_4$ et $C_2F_3Cl$, le rapport molaire :

$$\frac{C_2F_4}{C_2F_3Cl}$$

étant de 0,5 à 1,5,
- 4 à 15 moles de polyol allylique,
- 10 à 30 moles d'éther vinylique.

Parmi les polyols allyliques préférés, peuvent être cités le 3 allyloxy-1,2 propanediol et le triméthylolpropanemonoallyléther.

Parmi les éthers vinyliques préférés peuvent être cités le butylvinyléther, l'isobutylvinyléther, le propyl et isopropylvinyléther.

Afin de pouvoir utiliser ces copolymères dans une composition liquide de revêtement telle que peinture ou vernis, il est recommandé que la viscosité inhérente du copolymère dissous dans le diméthylformamide à 25 °C à une concentration de 1 g/dl, soit comprise entre les valeurs de 0,06 et 0,9 dl/g et de préférence entre 0,06 et 0,3 dl/g.

Les copolymères connus possédant plus de 60 % de motifs provenant de $C_2F_4$ et/ou $C_2F_3Cl$ sont en général peu solubles dans les solvants courants du type ester ou cétone de sorte qu'il est difficile d'en faire des solutions fluides à extrait sec élevé. Grâce à l'association de polyol allylique et d'éther vinylique dans la composition, il est maintenant possible d'obtenir des copolymères possédant de hautes teneurs en $C_2F_4$ et $C_2F_3Cl$ apte à leur utilisation dans les peintures et vernis.

Le copolymère selon l'invention est habituellement obtenu selon le procédé connu de polymérisation en solution. Le procédé consiste à copolymériser les monomères éthyléniquement insaturés en milieu solvant en présence d'un initiateur organosoluble, à une température comprise entre environ 30 et 120 °C et de préférence entre 40 et 80 °C, sous une pression d'environ 10 à 80 bars et de préférence entre 15 et 40 bars.

Selon l'invention, le copolymère fluoré durcissable est obtenu par copolymérisation de tétrafluoroéthylène, de chlorotrifluoroéthylène,et tels que définis précédemment de polyol allylique et d'éther vinylique.

Pour 100 moles de monomères éthyléniquement insaturés copolymérisés sont utilisées :

- 62 à 75 moles représentant la somme de $C_2F_4$ et $C_2F_3Cl$, le rapport molaire :

$$\frac{C_2F_4}{C_2F_3Cl}$$

étant de 0,5 à 1,5,
- 4 à 15 moles de polyol allylique,

- 10 à 30 moles d'éther vinylique.

Selon un mode de copolymérisation préféré, le solvant est chauffé à la température de réaction choisie dans un réacteur agité préalablement dégazé. Un mélange de monomère fluoré ainsi qu'une fraction initiale de polyol allylique et d'éther vinylique sont introduits dans le réacteur.

La quantité de mélange de monomères à introduire pour atteindre la pression de réaction choisie dépend des conditions de solubilité des monomères fluorés dans le solvant choisi. Le rapport pondéral monomères/solvant est en général compris entre 0,1 et 1.

Lorsque la pression de réaction et la température de réaction sont atteintes, on introduit dans le réacteur l' initiateur de polymérisation. La formation de copolymère se traduit par une baisse de pression que l'on compense par l'ajout de mélange de monomères fluorés.

On peut ajouter un mélange de monomères fluorés de composition molaire identique à celle que l'on a introduite au départ. On peut également tenir compte des réactivités propres de chaque monomère et ajuster la composition du mélange ajouté au cours de la polymérisation pour faire un copolymère homogène en composition.

Les monomères allylique et vinyléther peuvent également être ajoutés en cours de polymérisation. Ils peuvent également être ajoutés en mélange ou séparément, en association ou non aux ajouts de monomères fluorés.

Les monomères allylique et vinyléther sont ajoutés, de telle sorte que la composition du mélange de monomères fluorés et de monomères allylique et vinyléther reste constante pendant toute la durée de la polymérisation.

L'ajout du mélange de monomères pour maintenir la pression est poursuivi suffisamment longtemps pour atteindre un extrait sec de l'ordre de 10 à 60 %, de préférence de 15 à 40 %.

Les réactifs résiduaires volatils peuvent être éliminés par dégazage.

La solution extraite du réacteur de polymérisation peut être conservée telle quelle si le solvant de polymérisation convient pour l'application peinture. Dans le cas contraire, il peut être éliminé par distillation et remplacé par un autre solvant plus adapté au type d'application choisie. La solution peut éventuellement subir un lavage à l'eau destiné à éliminer des résidus hydrosolubles formés lors de la copolymérisation, responsables d'une mauvaise stabilité au stockage.

Les solvants choisis pour la réaction de copolymérisation doivent permettre de solubiliser le mélange des monomères tout en restant inertes vis-à-vis des autres composants réactionnels. Ils sont choisis de préférence parmi les acétates et les alcools. Parmi les acétates préférés, l'acétate de butyle, d'isobutyle et d'éthyle sont particulièrement retenus. Parmi les alcools préférés, sont cités le n-propanol et le tertiobutanol.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisopropyle ou de dicyclohexyle, le perpivalate de tertiobutyle ou de tertioamyle, l'azobisisobutyronitrile et l'azo-bis-2,2-diméthylvaléronitrile.

Les masses moléculaires en nombre ($\overline{Mn}$) des copolymères réticulables obtenus sont, de préférence, compris entre 1000 et 20 000 ; elles sont mesurées par la technique de chromatographie d'exclusion stérique (GPC) après dissolution dans la diméthylformamide, à température ambiante. Ces mesures GPC sont réalisées sur un dispositif à 3 colonnes WATERS microstyragel $10^2$ nm, $10^3$ nm, $10^4$ nm, calibré par des étalons polyéthylène glycol. La détection est assurée par un réfractomètre.

Tel quel, le copolymère en milieu solvant donne une solution transparente. A cette solution, peuvent être ajoutés les additifs souhaités tels que pigments, charges, solvants, diluants, agents modificateurs de rhéologie, agents d'étalement, agents mouillants, antimousses, agents stabilisants contre la chaleur ou la lumière, promoteurs d'adhésion, corésines ou agents de durcissement par réticulation.

Parmi les pigments on peut citer le dioxyde de titane, les oxydes de fer, l'oxyde de chrome vert, le bleu de cobalt, le jaune de chrome, le noir de carbone ou des pigments inhibiteurs de corrosion tels que le phosphate de zinc, le triphosphate d'aluminium.

Parmi les solvants ou diluants, on peut citer les esters, les cétones, les éthers de propylènealycol, les composés aromatiques.

Parmi les corésines, on peut citer les résines acryliques, les polyesters, les polyéthers, les époxydes.

Parmi les agents de durcissement par réticulation, on peut citer les mélamines-formol éventuellement étherifiées, les isocyanates ou polyisocyanates libres ou bloqués, les acides ou polyacides organiques ou leurs anhydrides.

La température de réticulation de ces copolymères est généralement comprise entre -20 et +270 °C et dépend essentiellement de la nature du durcisseur.

L'aptitude à la réticulation des copolymères fluorés fonctionnels est jugée au moyen d'un test de résistance à un solvant.

Un coton imbibé de méthyléthylcétone (MEC) est frotté dans un mouvement de va et vient sur le revêtement jusqu'à apparition du support.

Un nombre d'allers retours supérieur à 50 montre une bonne réticulation, un nombre d'allers retours supérieur à 100 montre une excellente réticulation.

Les vernis ou une peinture à base de ces copolymères peuvent être appliqués par projection pneumatique ou électrostatique, au trempé, à la brosse, ou encore au rouleau. Ces copolymères peuvent être appliqués sur métaux, bois, verre, céramiques, matières plastiques ou même d'anciens revêtements.

Les exemples suivants illustrent l'invention sans toutefois la limiter.

## EXEMPLE 1 - COMPARATIF

Dans un autoclave de 3,3 l muni d'une agitation efficace, on introduit après dégazage sous vide, 2 litres de tertiobutanol, 410 g de $C_2F_3Cl$, 301 g de butylvinyléther et 65 g de 3 allyloxy-1,2 propanediol. La température de l'autoclave est portée à 70 °C. A cette température on ajoute 10 g de perpivalate de tertiobutyle en solution dans du tertiobutanol. La pression est d'environ 4,1 bars. Pour maintenir la pression entre 2,5 et 4,6 bars, on fait des ajouts de 45 g de $C_2F_3Cl$, 30 g de butylvinyléther et 7 g de 3 allyloxy-1,2 propanediol.

Pendant un temps de polymérisation de 2 heures, on introduit de cette manière 248 g de $C_2F_3Cl$, 220 g de butylvinyléther et 38 g le 3 allyloxy-1,2 propanediol. Après dégazage du $C_2F_3Cl$ résiduaire, le solvant est éliminé ainsi que le butylvinyléther et le 3 allyloxy-1,2 propanediol qui n'auraient pas réagi.

On récupère après distillation 811 g de copolymère. L'analyse RMN montre que ce copolymère est essentiellement constitué de motifs $C_2F_3Cl$ et de butylvinyléther. L'indice d'hydroxy est déterminé par un dosage chimique en milieu pyridine/anhydride phtalique.

La solution d'anhydride phtalique est préparée en dissolvant dans un flacon en verre 140 g d'anhydride phtalique et 1 l de pyridine.

1 g de copolymère est introduit dans 5 cc du réactif précédent et l'ensemble est porté pendant 1 heure à 95-100 °C. Après refroidissement, on dose par retour la disparition de l'anhydride phtalique. Le dosage effectué dans ces conditions ne permet pas de déceler une présence significative de groupements hydroxy dans le copolymère. Le taux d'allyloxypropanediol fixé dans le copolymère est inférieur à 0,3 % molaire.

### Essai 1

On prépare un vernis en mélangeant 80 g du copolymère précédent préalablement mis en solution à 50 % dans l'acétate de butyle avec 11,1 g d'une résine de mélamine formol étherifiée à 90 % dans l'isobutanol et 0,3 g d'acide p.toluène sulfonique.

La solution est appliquée au moyen d'un raclet spirale de 100 µm sur une plaquette d'aluminium chromaté dégraissée de 0,7 mm, puis étuvée à 150 °C pendant 30 minutes.

Le test de la résistance à la MEC ne permet d'atteindre que 3 allers retours avant apparition du substrat montrant ainsi la non réticulation du polymère.

## EXEMPLE 2

Dans un autoclave de 3,3 l muni d'une agitation efficace, on introduit après dégazage sous vide, 2 litres de tertiobutanol, 90 de butylvinyléther, 40 g de 3 allyloxy-1,2 propanediol.

La température de l'autoclave est portée à 70 °C. A cette température, on ajoute 280 g de $C_2F_3Cl$ et 240 g de $C_2F_4$, ce qui donne une pression de 15,1 bars. On introduit ensuite 10 g de perpivalate de tertiobutyle en solution dans du tertiobutanol. Pour maintenir la pression à 15 bars, on ajoute un mélange de $C_2F_4/C_2F_3Cl$ dans les proportions molaires de 50/50. Chaque fois que l'on a introduit 27 g de mélange de monomères, on introduit juste après 3,6 g de 3 de allyloxy-1,2 propanediol et 6,8 g de butylvinyléther. Pendant un temps de polymérisation de 4 h 30, on introduit ainsi 363 g de mélange $C_2F_4/C_2F_3Cl$ 50/50 molaires, 46,8 g de 3 allyloxy-1,2 propanediol et 88 g de butylvinyléther. 15 g de perpivalate de tertiobutyle sont ajoutés après 2 heures de polymérisation pour accélérer la cinétique.

Après 4 h 30 de polymérisation, l'autoclave est refroidi, les monomères résiduaires fluorés résiduaires sont dégazés et le contenu de l'autoclave est distillé sous vide. On récupère 645 g d'un copolymère

transparent et visqueux. Ce copolymère est dissous dans l'acétate de butyle de façon à former une solution à 50 % en copolymère. Cette solution est lavée dans un excès d'eau puis concentrée pour amener la solution à 77,5 %. A cette concentration élevée, la coulabilité du copolymère reste excellente.

Le dosage d'hydroxy tel que décrit dans l'exemple 1 donne une valeur de $0{,}910^{-3}$ équivalent par gramme. La viscosité inhérente d'une solution de copolymère dans le diméthylformamide à 25°C à une concentration de 1g/dl est de 0,086 dl/g.

L'analyse RMN en Fluor 19 permet d'évaluer la composition molaire du copolymère à :

| | |
|---|---|
| $C_2F_4$<br>$C_2F_3Cl$<br>butylvinyléther<br>3 allyloxy-1,2 propanediol | 33,5 %<br>33,5 %<br>28 %<br>5 % |
| La masse moléculaire déterminée par GPC est de $\overline{Mn}$ = 9900 | |

**Essai 2**

On prépare une pâte pigmentaire en mélangeant dans un broyeur à billes pendant 30 minutes à 1500 t/min, 150,2 g du copolymère en solution précédent avec 29,5 g d'acétate de butyle et 118 g de dioxyde de titane.

Pour obtenir une peinture blanche, on déconcentre 119,8 g de cette base pigmentaire avec 13,2 g de la solution de copolymère précédente, 12,6 g d'une résine de mélamine formol étherifiée en solution à 90 % dans l'isobutanol, 25,6 g de xylène.

Cette peinture est appliquée au moyen d'un raclet spirale de 125 µm sur une plaquette d'aluminium chromaté dégraissée, d'épaisseur 0,7 mm. La plaquette est ensuite étuvée pendant 30 minutes à 130°C pour donner un film d'épaisseur 32 µm. Le film de peinture résiste à plus de 100 allers retours à la MEC. Il présente une dureté pendulaire mesurée selon NFT 30-016 de 170 s et un brillant spéculaire à 60° mesuré selon ASTM D 523-85 de 69 %. Ce brillant n'est pas affecté par une exposition de 1000 h au Q.U.V. Le Q.U.V. est un appareil de vieillissement accéléré. Les effets du soleil sont reproduits au moyen de quatre tubes émettant des rayonnements UV-B. La température pendant l'exposition aux UV est de 63°C. Un dispositif de condensation d'eau permet de maintenir le taux d'humidité à 100 % pendant la phase de condensation. La température de l'échantillon pendant la phase de condensation est de 50°C. On alterne les phases de condensation et d'irradiation, chacune de 4 heures.

L'adhérence initiale sur le support est de classe 0 (NFT 30038). Elle n'est pas affectée après 1 heure à l'eau bouillante.

**Essai 3**

On prépare une pâte pigmentaire en mélangeant dans un broyeur à billes pendant 30 minutes à 1500 t/min, 150,2 g du copolymère en solution précédent avec 29,5 g d'acétate de butyle et 118 g de dioxyde de titane

Pour obtenir une peinture blanche, on déconcentre 119,8 g de cette base pigmentaire avec 13,2 g de la solution de copolymère précédente, 9,8 g d'un trimère de l'héxaméthylène diisocyanate, 0,3 g d'une solution de dilaurate dibutylétain (DBTL) à 10 % dans l'acétate de butyle, 18,6 g d'acétate de méthoxy propanol.

Cette peinture est appliquée du moyen d'un raclet spirale de 125 µm sur une plaquette d'aluminium chromaté dégraissée, d'épaisseur 0,7 mm. La plaquette est ensuite laissée sécher pendant 48 heures à température ambiante pour donner un film d'épaisseur 36 µm. Le film de peinture résiste à plus de 100 allers retours à la MEC. Il présente une dureté pendulaire mesurée selon NFT 30-016 de 180 s et un brillant spéculaire à 60° mesuré selon ASTM D 523-85 de 69 %, ce brillant n'est pas affecté par une exposition de 1000 h au Q.U.V..

L'adhérence initiale sur le support est de classe 0 (NFT 30038). Elle n'est pas affectée après 1 heure à l'eau bouillante.

## Essai 4

On prépare une pâte pigmentaire en mélangeant dans un broyeur à billes pendant 30 minutes à 1500 t/min, 160 g du copolymère en solution précédent avec 30 g d'acétate de butyle et 16 g de dioxyde de titane, 58,6 g de bleu de cobalt et 8, 8 g de noir de carbone.

Pour obtenir une peinture blanche, on déconcentre 100 g de cette base pigmentaire avec 18,9 g de la solution de copolymère précédente, 15,2 g d'une résine de mélamine formol étherifiée en solution à 90 % dans l'isobutanol, 37,8 g de xylène, 0,2 g d'acide para-toluène sulfonique.

Cette peinture est appliquée au moyen d'un pistolet pneumatique sur une plaquette d'acier galvanisé dégraissée, d'épaisseur 0,8 mm. La plaquette est ensuite étuvée pendant 30 minutes à 130 ° C pour donner un film de 32 µm d'épaisseur. Le film de peinture résiste à plus de 100 allers retours à la MEC. Il présente une dureté pendulaire mesurée selon NFT 30-016 de 185 s et un brillant spéculaire à 60 ° mesuré selon ASTM D 523-85 de 65 % qui n'est pas affecté après 1000 h d'exposition au Q.U.V.

L'adhérence initiale sur le support est de classe 0 (NFT 30038). Elle n'est pas affectée après 1 heure à l'eau bouillante.

## EXEMPLE 3

Dans un autoclave de 3,3 l muni d'une agitation efficace, on introduit après dégazage sous vide, 2 litres de tertiobutanol, 70 g de butylvinyléther, 30 g de triméthylol-propanemonoallyléther.

La température de l'autoclave est portée à 70 ° C. A cette température, on ajoute 280 g de $C_2F_3Cl$ et 240 g de $C_2F_4$, ce qui donne une pression de 15,1 bars. On introduit ensuite 10 g de perpivalate de tertiobutyle en solution dans du tertiobutanol. Pour maintenir la pression à 15 bars, on ajoute un mélange de $C_2F_4/C_2F_3Cl$ dans les proportions molaires de 50/50. Chaque fois que l'on a introduit 27 g de mélange de monomères, on introduit juste après 5,1 g de triméthylolpropanemonoallyléther et 5,4 g de butylvinyléther. Pendant un temps de polymérisation de 6 h, on introduit ainsi 363 g de mélange $C_2F_4/C_2F_3Cl$ 50/50 molaires, 66 g de triméthylolpropanemonoallyléther et 70 g de butylvinyléther. 15 g de perpivalate de tertiobutyle sont ajoutés après 2 heures de polymérisatlon pour accélérer la cinétique.

Après 6 h de polymérisation, l'autoclave est refroidi, les monomères fluorés résiduaires sont dégazés et le contenu de l'autoclave est distillé sous vice. On récupère 665 g d'un copolymère transparent et visqueux. Ce copolymère est dissous dans l'acétate de butyle de façon à former une solution à 50 % en copolymère. Cette solution est lavée dans un excès d'eau puis concentrée pour amener la solution à 75 %. A cette concentration élevée, la coulabilité du copolymère reste excellente.

Le dosage d'hydroxy tel que décrit dans l'exemple 1 donne une valeur de 1,4 $10^{-3}$ équivalent par gramme. La viscosité inhérente d'une solution de copolymère dans le diméthylformamide à 25 ° C à une concentration de 1g/dl est de 0,092 dl/g.

L'analyse RMN en Fluor 19 permet d'évaluer la composition molaire du copolymère à :

| | |
|---|---|
| $C_2F_4$ | 35 % |
| $C_2F_3Cl$ | 35 % |
| butylvinyléther | 22 % |
| triméthylolpropanemonoallyléther | 8 % |
| La masse moléculaire déterminée par GPC est de $\overline{Mn}$ = 8000 | |

## Essai 5

On prépare une pâte pigmentaire en mélangeant dans un broyeur à billes pendant 30 minutes à 1500 t/min, 180 g du copolymère en solution précédent avec 15 g d'acétate de butyle et 145 g de dioxyde de titane.

Pour obtenir une peinture blanche, on déconcentre 100 g de cette base pigmentaire avec 2,9 a de la solution de copolymère précédente, 7 g d'une résine ce mélamine formol étherifiée en solution à 90 % dans l'isobutanol et 2 g de xylène.

Cette peinture est appliquée au moyen d'un raclet spirale de 125 µm sur une plaquette de polybutylènetéréphtalate de 2 mm d'épaisseur. La plaquette est ensuite étuvée pendant 30 minutes à 130 ° C. Le film de peinture résiste à plus de 100 allers retours à la MEC. Il présente une dureté pendulaire mesurée selon

NFT 30-016 de 210 s et un brillant spéculaire à 60° mesuré selon ASTM D 523-85 de 55 % qui n'est pas affecté après 1000 h d'exposition au Q.U.V.

L'adhérence initiale sur le support est de classe 0 (NFT 30038). Elle n'est pas affectée après 1 heure à l'eau bouillante.

## EXEMPLE 4

Dans un autoclave de 3,3 l muni d'une agitation efficace, on introduit après dégazage sous vide, 2 litres de tertiobutanol, 63 de butylvinyléther, 76 g de 3 allyloxy-1,2 propanediol.

La température de l'autoclave est portée à 70°C. A cette température, on a joute 280 g de $C_2F_3Cl$ et 240 g de $C_2F_4$, ce qui donne une pression de 15,1 bars. On introduit ensuite 10 g de perpivalate de tertiobutyle en solution dans du tertiobutanol. Pour maintenir la pression à 15 bars, on ajoute un mélange de $C_2F_4/C_2F_3Cl$ dans les proportions molaires de 50/50. Chaque fois que l'on a introduit 27 g de mélange de monomères, on introduit juste après 6,8 g de 3 allyloxy-1,2 propanediol et 4,8 g de butylvinyléther. Pendant un temps de polymérisation de 7 h 30, on introduit ainsi 350 g de mélange $C_2F_4/C_2F_3Cl$ 50/50 molaires, 89 g de 3 allyloxy-1,2 propanediol et 62 g de butylvinyléther. 15 g de perpivalate de tertiobutyle sont ajoutés après 2 heures et 4 heures de polymérisation pour accélérer la cinétique.

Après 7 h 30 de polymérisation, l'autoclave est refroidi, les monomères fluorés résiduaires sont dégazés et le contenu de l'autoclave est distillé sous vide. On récupère 650 g d'un copolymère transparent et visqueux. Ce copolymère est dissous dans l'acétate de butyle de façon à former une solution à 50 % en copolymère. Cette solution est lavée dans un excès d'eau puis concentrée pour amener la solution à 70 %. A cette concentration élevée, la coulabilité du copolymère reste excellente.

Le dosage d'hydroxy tel que décrit dans l'exemple 1 donne une valeur de 1,6 $10^{-3}$ équivalent par gramme. La viscosité inhérente d'une solution de copolymère dans le diméthylformamide à 25°C à une concentration de 1g/dl est de 0,095 dl/g.

L'analyse RMN en Fluor 19 permet d'évaluer la composition molaire du copolymère à :

| | |
|---|---|
| $C_2F_4$ | 36 % |
| $C_2F_3Cl$ | 36 % |
| butylvinyléther | 19 % |
| allyloxypropanediol | 9 % |
| La masse moléculaire déterminée par GPC est de $\overline{Mn}$ = 9000 | |

### Essai 6

On prépare une pâte pigmentaire en mélangeant dans un broyeur à billes pendant 30 minutes à 1500 t/min, 285,7 g du copolymère en solution précédent avec 30,3 g d'acétate de butyle et 184 g de dioxyde de titane.

Pour obtenir une peinture blanche, on déconcentre 100 g de cette base pigmentaire avec 12,6 g d'un trimère de l'héxaméthylènediisocyanate, 0,4 g de DBTL à 10 % dans l'acétate de butyle et 10 g d'acétate de méthoxy propanol.

Cette peinture est appliquée au moyen d'un raclet spirale de 125 µm sur une plaquette d'aluminium chromaté dégraissée de 0,7 mm d'épaisseur. La plaquette est ensuite étuvée pendant 30 minutes à 80°C. Le film de peinture résiste à plus de 100 allers retours à la MEC. Il présente une dureté pendulaire mesurée selon NFT 30-016 de 220 s et un brillant spéculaire à 60° mesuré selon ASTM D 523-85 de 65 % qui n'est pas affecté après 1000 h d'exposition au Q.U.V..

L'adhérence initiale sur le support est de classe 0 (NFT 30038). Elle n'est pas affectée après 1 heure à l'eau bouillante.

### Revendications

1. Copolymère durcissable contenant les restes de copolymérisation d'un monomère fluoré et d'un composé allylique, caractérisé en ce que :

   **a)** les restes de monomère fluoré proviennent de l'association de tétrafluoroéthylène et de chlorotrifluoroéthylène,

**b)** les restes du composé allylique proviennent d'un polyol allylique de formule :

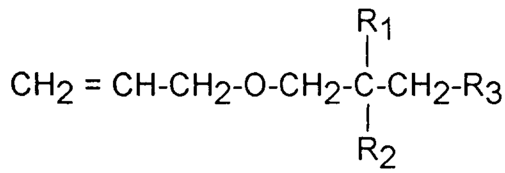

$R_1$ étant H ou $CH_2OH$, $R_2$ étant OH ou $CH_2OH$, $R_3$ étant $CH_3$ ou OH,
sachant que $R_1$ et $R_3$ ne peuvent être simultanément H et $CH_3$, et, en ce qu'il contient en outre
**c)** les restes de copolymérisation d'un éther vinylique de formule :

$CH_2 = CH\text{-}O\text{-}R$

dans laquelle R est un radical alkyl linéaire ou ramifié possédant de 2 à 13 atomes de carbone,.
et en ce qu'il comprend pour 100 moles de l'ensemble des restes des monomères éthyléniquement insaturés les restes de :

- 62 à 75 moles représentant la somme de $C_2F_4$ et $C_2F_3Cl$, le rapport molaire : $C_2F_4/C_2F_3Cl$ étant de 0,5 à 1,5,
- 4 à 15 moles de polyol allylique,
- 10 à 30 moles d'éther vinylique.

**2.** Copolymère selon la revendication 1, caractérisé en ce que sa viscosité inhérente en solution dans la diméthylformamide à 25 °C à une concentration de 1 g/dl est comprise entre les valeurs de 0,06 et 0,9 dl/g.

**3.** Copolymère selon l'une des revendications 1 ou 2, caractérisé en ce qu'il se présente en solution dans un solvant organique.

**4.** Copolymère selon la revendication 3, caractérisé en ce que le solvant est un alcool ou un acétate.

**5.** Procédé de fabrication de copolymère durcissable à base de monomère fluoré et d'un composé allylique, caractérisé en ce qu'on copolymérise du tétrafluoroéthylène, du chlorotrifluoroéthylène, un polyol allylique tel que défini en revendication 1 et un éther vinylique tel que défini en revendication 1 et en ce que pour 100 moles de monomères éthyléniquement insaturés on copolymérise :

- 62 à 75 moles représentant la somme de $C_2F_4$ et $C_2F_3Cl$, le rapport molaire : $C_2F_4/C_2F_3Cl$ étant de 0,5 à 1,5,
- 4 à 15 moles de polyol allylique,
- 10 à 30 moles d'éther vinylique.

**6.** Procédé selon la revendication 5, caractérisé en ce que la copolymérisation s'effectue en solution en présence d'un initiateur organosoluble à une température comprise entre 30 et 120 °C et à une pression comprise entre 10 et 80 bars.

**7.** Procédé selon la revendication 6, caractérisé en ce que le solvant est un alcool ou un acétate.

**8.** Peinture ou vernis constitué de copolymère durcissable selon l'une des revendications 1 ou 2 en solution dans un solvant.

## Claims

**1.** Curable copolymer containing copolymerization residues of a fluorine-containing monomer and of an allyl compound, characterized in that:
a) the fluorine-containing monomer residues originate from the combination of tetrafluoroethylene and chlorotrifluoroethylene, and

b) the allyl compound residues originate from an allyl polyol of formula:

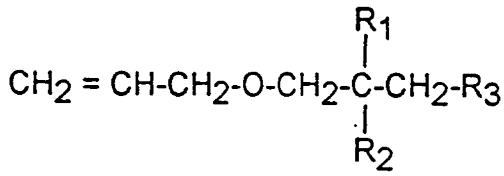

$R_1$ being H or $CH_2OH$, $R_2$ being OH or $CH_2OH$, and $R_3$ being $CH_3$ or OH, on condition that $R_1$ and $R_3$ may not simultaneously be H and $CH_3$, and in that it also contains

c) copolymerization residues of a vinyl ether of formula:

$CH_2 = CH\text{-}O\text{-}R$

in which R is a straight-chain or branched alkyl radical having from 2 to 13 carbon atoms,

and in that it contains, per 100 moles of all of the ethylenically unsaturated monomer residues, the residues of:

- 62 to 75 moles representing the sum of $C_2F_4$ and $C_2F_3Cl$, the molar ratio: $C_2F_4/C_2F_3Cl$ being from 0.5 to 1.5,
- 4 to 15 moles of allyl polyol, and
- 10 to 30 moles of vinyl ether.

**2.** Copolymer according to Claim 1, characterized in that its inherent viscosity in solution in dimethylformamide at 25 °C in a concentration of 1 g/dl is between the values of 0.06 and 0.9 dl/g.

**3.** Copolymer according to one of Claims 1 and 2, characterized in that it is in the form of a solution in an organic solvent.

**4.** Copolymer according to Claim 3, characterized in that the solvent is an alcohol or an acetate.

**5.** Process for the manufacture of a curable copolymer based on fluorine-containing monomer and on an allyl compound, characterized in that tetrafluoroethylene, chlorotrifluoroethylene, an allyl polyol as defined in Claim 1 and a vinyl ether as defined in Claim 1 are copolymerized, and in that, per 100 moles of ethylenically unsaturated monomers, the following are copolymerized:

- 62 to 75 moles representing the sum of $C_2F_4$ and $C_2F_3Cl$, the molar ratio: $C_2F_4/C_2F_3Cl$ being from 0.5 to 1.5,
- 4 to 15 moles of allyl polyol, and
- 10 to 30 moles of vinyl ether.

**6.** Process according to Claim 5, characterized in that the copolymerization takes place in solution in the presence of an initiator that can be dissolved in an organic solvent, at a temperature of between 30 and 120 °C, and at a pressure of between 10 and 80 bar.

**7.** Process according to Claim 6, characterized in that the solvent is an alcohol or an acetate.

**8.** Paint or varnish consisting of curable copolymer according to one of Claims 1 and 2 in solution in a solvent.

## Patentansprüche

**1.** Härtbares Copolymer, enthaltend Reste aus der Copolymerisation eines fluorierten Monomers mit einer Allylverbindung, dadurch gekennzeichnet, daß:

a) die Reste des fluorierten Monomers aus der Tetrafluorethylen- und der Trifluorchlorethylengruppe stammen,

b) die Reste der Allylverbindung aus einem Allylpolyol der Formel

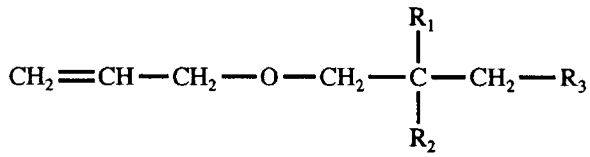

stammen, wobei $R_1$ H oder $CH_2OH$, $R_2$ OH oder $CH_2OH$ und $R_3$ $CH_3$ oder OH ist, wobei $R_1$ und $R_3$ nicht gleichzeitig H und $CH_3$ sind und das Copolymer ferner enthält

c) Reste aus der Copolymerisation eines Vinylethers der Formel

$CH_2 = CH—O—R$

in der R ein geradkettiger oder verzweigter Alkylrest mit 2 bis 13 Kohlenstoffatomen ist,

und daß das Copolymer pro 100 Mol der insgesamt vorhandenen ethylenisch ungesättigten Monomerreste folgende Reste umfaßt:

- 62 bis 75 Mol, die sich aus $C_2F_4$ und $C_2F_3Cl$ zusammensetzen, wobei das Molverhältnis von $C_2F_4$ zu $C_2F_3Cl$ im Bereich von 0,5 bis 1,5 liegt,
- 4 bis 15 Mol Allylpolyol und
- 10 bis 30 Mol Vinylether.

**2.** Copolymer nach Anspruch 1, dadurch gekennzeichnet, daß seine Eigenviskosität, gelöst in Dimethylformantid, bei 25 °C und einer Konzentration von 1 g/dl im Bereich von 0,06 bis 0,9 dl/g liegt.

**3.** Copolymer nach einem der Ansprüche 1 oder 2, dadurch gekennzeichnet, daß es in einem organischen Lösemittel gelöst vorliegt.

**4.** Copolymer nach Anspruch 3, dadurch gekennzeichnet, daß das Lösemittel ein Alkohol oder ein Acetat ist.

**5.** Verfahren zur Herstellung eines härtbaren Copolymers auf Basis eines fluorierten Monomers und einer Allylverbindung, dadurch gekennzeichnet, daß Tetrafluorethylen, Trifluorchlorethylen, ein Allylpolyol nach Anspruch 1 und ein Vinylether nach Anspruch 1 copolymerisiert werden, und daß pro 100 Mol an ethylenisch ungesättigten Monomeren

- 62 bis 75 Mol, die sich aus $C_2F_4$ und $C_2F_3Cl$ zusammensetzen, wobei das Molverhältnis von $C_2F_4$ zu $C_2F_3Cl$ im Bereich von 0,5 bis 1,5 liegt,
- 4 bis 15 Mol Allylpolyol und
- 10 bis 30 Mol Vinylether

copolymerisiert werden.

**6.** Verfahren nach Anspruch 5, dadurch gekennzeichnet, daß die Copolymerisation in Lösung und in Gegenwart eines in einem organischen Lösemittel löslichen Initiators bei einer Temperatur von 30 bis 120 °C und bei einem Druck von 10 bis 80 bar durchgeführt wird.

**7.** Verfahren nach Anspruch 6, dadurch gekennzeichnet, daß das Lösemittel ein Alkohol oder ein Acetat ist.

**8.** Anstrich oder Lack, bestehend aus einem in einem Lösemittel gelösten härtbaren Copolymer nach einem der Ansprüche 1 oder 2.